# EUROPÄISCHE PATENTSCHRIFT

(11) **EP 2 212 149 B1**
(45) Veröffentlichungstag und Bekanntmachung des Hinweises auf die Patenterteilung: **06.12.2017**
(21) Anmeldenummer: 08842423.9
(22) Anmeldetag: 16.10.2008
(51) Int. Cl.: B60K 37/06, B60R 16/023, G06F 3/023, G06F 3/0489

(54) **DIALOGSYSTEM FÜR EIN KRAFTFAHRZEUG**
DIALOGUE SYSTEM FOR A MOTOR VEHICLE
SYSTÈME DE DIALOGUE POUR VÉHICULE À MOTEUR

(30) Priorität: 25.10.2007 DE 102007051015
(43) Veröffentlichungstag der Anmeldung: 04.08.2010
(73) Patentinhaber: Bayerische Motoren Werke Aktiengesellschaft, 80809 München (DE)
(72) Erfinder: KUENZNER, Hermann, 85356 Freising (DE)
(74) Vertreter: Kammermeier, Peter Frank
(86) Internationale Anmeldenummer: PCT/EP2008/008746
(87) Internationale Veröffentlichungsnummer: WO 2009/052987

(56) Entgegenhaltungen:
- EP-A- 1 026 041
- EP-A- 1 635 144
- EP-A1- 0 703 525
- EP-A2- 0 691 740
- WO-A-97/47135
- DE-A1-102004 058 954
- DE-U1- 20 000 408
- US-A1- 2002 149 704
- US-A1- 2006 080 032

## Beschreibung

Die Erfindung betrifft ein Dialogsystem für ein Kraftfahrzeug mit einer Mehrzahl von Bedientasten, von denen zumindest eine mit einer Funktion aus einer vorgegebenen Menge von Funktionen derart belegbar ist, dass diese Funktion bei Betätigung dieser Bedientaste ausgeführt wird.
Ein solches Dialogsystem ist beispielsweise bekannt aus der DE 10 2004 058 954 A1. Es ist bekannt, die Bedientasten eines solchen Dialogsystems derart einzurichten, dass sie mit Navigationszielen, Telefonnummern, Radiosendern und/oder Audio-Quellen belegbar sind. Streng genommen stellen die genannten Belegungsgrößen (Navigationsziele, Telefonnummern bzw. Radiosender) einen Parameter einer auszuführenden Funktion dar. Beispielsweise soll schließlich bei Betätigung einer Bedientaste, die mit einem Navigationsziel belegt ist, eine Zielführung (= Funktion) zu dem Navigationsziel (= Parameter) gestartet werden.
Je nach technischer Umsetzung kann der Bedientaste nur der Parameter zugeordnet werden und die geeignete Funktion wird anhand der Kategorie des Parameters bei Betätigung der Bedientaste bestimmt (z.B. Zielführung im Falle eines Navigationszieles) oder es werden
sowohl die Funktion als auch der Parameter der Bedientaste zugeordnet. Auch Dialogsysteme, bei denen einer Bedientaste informationstechnisch lediglich ein solcher Parameter zugeordnet wird, sind der eingangs genannten Gattung insofern zuzurechnen, als ihnen durch die Kategorie des Parameters faktisch auch eine zu dessen Verwertung geeignete Funktion zugeordnet ist.

Aus der EP1026041 A2 ist ein Dialogsystem für ein Kraftfahrtzeug mit einer Mehrzahl frei programmierbarer makrobefehlsfähiger Bedientasten bekannt. Dabei ist es möglich, eine Befehlskette (sog. Makrobefehlskette) zu erstellen, die sodann auf eine der programmierbaren Bedientasten gelegt werden kann. Dadurch ist es möglich Befehlsketten, die man ansonsten durch mehrere Tasten generieren müsste, nunmehr auf einen Tastendruck hin generieren zu können. Solche Makrobefehlsketten können beispielsweise bestimmte Einstellungen in der Betätigung und in der Anzeige einer Navigationseinrichtung sein, oder des Bordcomputers oder beispielsweise des Radios, wobei dann bei entsprechender Programmierung und Betätigung dieser Bedientaste nicht nur das Radio eingeschaltet wird, sondern beispielsweise eine bereits vorher programmierte Senderfestlegung mit Anzeige der Verkehrsfunksender etc. gleichzeitig generiert werden kann.

Es ist eine Aufgabe der Erfindung, ein Dialogsystem zu schaffen, das den durch die freie Belegbarkeit von Bedientasten erreichbaren Bedienkomfort weiter steigert.
Gelöst wird diese Aufgabe durch ein Dialogsystem mit den Merkmalen des Anspruchs 1. Vorteilhafte Ausführungsformen und Weiterbildungen der Erfindung ergeben sich aus den abhängigen Ansprüchen.

Erfindungsgemäß kann der Bedientaste neben einem Primärparameter, der für die Ausführung der Funktion essenziell ist (z.B. Navigationsziel für eine Zielführung, Telefonnummer für einen Anruf, URL für einen Internet-Aufruf, Radiosender für eine Radio-Wiedergabe, Quellenangabe für eine Quellenwahl) zumindest ein eine Art und Weise der Funktionsausführung festlegender Sekundärparameter werden.
Es kann auf diese Weise durch den Bediener festgelegt werden, in welcher Art und Weise die Funktion ausgeführt werden soll, wenn sie mittels der Bedientaste mit dem Primärparameter aufgerufen wird.
Die Erfindung beruht auf dem Gedanken, dass die von einem Bediener bevorzugte Art und Weise der Ausführung einer Funktion oft stark von dem jeweiligen Primärparameter abhängt. Solche Bevorzugungen können insbesondere die Art und Weise einer Klangwiedergabe betreffen. Sie können aber auch eine Art und Weise einer Bildschirmansicht betreffen. Die Unterstützung der Zuordnung von Sekundärparametern betreffend diese beiden Schwerpunkte einer Funktionsausführung ist -jeweils separat oder kombiniert - als besonders vorteilhaft anzusehen.
Durch die Zuordnung des zumindest einen Sekundärparameters zu der Bedientaste wird vermieden, dass der Bediener vor oder nach Auslösung der jeweiligen Funktion mittels einer Betätigung der Bedientaste durch mühsame Einstellvorgänge die Art und Weise der Funktionsausführung so einstellen muss, wie er es für angemessen und/oder richtig erachtet bzw. wünscht.
Besonders vorteilhaft ist die Erfindung dann, wenn der Sekundärparameter einen kontinuierlich oder quasi-kontinuierlich festlegbaren Einstellungsparameter betrifft, beispielsweise eine Lautstärke. Die Festlegung eines solchen Einstellungsparameters erfolgt bei bekannten Systemen sehr häufig iterativ über einen längeren Zeitraum hinweg. Durch die Erfindung ist dem Bediener hingegen die Möglichkeit gegeben, eine Einstellung des Sekundärparameters, die er nach langwierigen Versuchen schließlich als in Kombination mit einem bestimmten Primärparameter geeignet erachtet, durch Zuordnung zur jeweiligen Bedientaste in gerade diesem Kontext zu konservieren.
Gemäß einer bevorzugten Ausführungsform der Erfindung betrifft der zumindest eine Sekundärparameter die Art und Weise einer Klangwiedergabe. Dies ist insbesondere dann vorteilhaft, wenn der Primärparameter einen Radiosender oder eine Audio-Quelle betrifft.

Beispielsweise hören viele Benutzer Radiosender generell gerne eher leise, selbst ausgewählte Musik-CDs dagegen eher laut. Für solche Benutzer ist es vorteilhaft, einer Bedientaste, die mit dem Primärparameter "Audio-Quelle Radio" belegt ist, einen geringen Lautstärkepegel als Sekundärparameter zuzuordnen und/oder einer Bedientaste, die mit dem Primärparameter "Audio-Quelle CD" belegt ist, einen hohen Lautstärkepegel als Sekundärparameter zuzuordnen. Auch hören viele Benutzer Radiosender, die überwiegend Nachrichten senden, gerne mit gleichmäßiger Klang-Auspegelung, hingegen hören sie Radiosender, die überwiegend Musik senden, gerne mit hervorgehobenen Bässen. Für solche Benutzer ist es vorteilhaft, einer Bedientaste, die mit einem ersten (nachrichten-lastigen) Radiosender als Primärparameter belegt ist, eine gleichmäßige Klangverteilung als Sekundärparameter zuzuordnen und/oder einer Bedientaste, die mit einem zweiten (musik-lastigen) Radiosender als Primärparameter belegt ist, eine Klangverteilung mit hervorgehobenen Bässen als Sekundärparameter zuzuordnen. Auch einer Telefonnummer kann vorteilhaft eine bestimmte Lautstärke und/oder Klangverteilung als Sekundärparameter beigestellt werden, wenn der anzurufende Teilnehmer erfahrungsgemäß sehr laut oder leise oder in sonstiger Weise schwer verständlich spricht.

Gemäß einer bevorzugten Ausführungsform der Erfindung betrifft der zumindest eine Sekundärparameter die Art und Weise einer Bildschirmansicht, beispielsweise die Ausrichtung (fahrtweisend/nordweisend) und/oder den Maßstab einer Kartenansicht. Dies ist insbesondere dann vorteilhaft, wenn der Primärparameter ein Navigationsziel betrifft. Viele Benutzer bevorzugen bei der Zielführung zu bestimmten Zielen, etwa wenn diese in einer geschlossenen Ortschaft gelegen sind, einen kleinen Karten-Maßstab, bei der Zielführung zu anderen Zielen, etwa wenn diese außerhalb von geschlossenen Ortschaften gelegen sind, hingegen einen großen Karten-Maßstab. Für solche Benutzer ist es vorteilhaft, einer Bedientaste, die mit einem ersten Navigationsziel als Primärparameter belegt ist, einen kleinen Karten-Maßstab als Sekundärparameter zuzuordnen und/oder einer Bedientaste, die mit einem zweiten Navigationsziel als Primärparameter belegt ist, einen großen Karten-Maßstab als Sekundärparameter zuzuordnen. Die Art und Weise der Bildschirmansicht kann auch den Bildschirminhalt betreffen. Beispielsweise kann einer Telefonnummer vorteilhaft ein bestimmter Bildschirminhalt als Sekundärparameter beigestellt werden, beispielsweise eine Anzeige der entstehenden Gesprächskosten, wenn bei Gesprächen mit dem anzurufenden Teilnehmer erfahrungsgemäß hohe Gesprächskosten entstehen. Gemäß einer anderen besonders bevorzugten Ausführungsform der Erfindung ist der Primärparameter eine Internet-Adresse und der Sekundärparameter eine Schriftgröße für die Anzeige der unter dieser Internet-Adresse verfügbaren Inhalte.

Gemäß einer anderen bevorzugten Ausführungsform der Erfindung ist der Primärparameter ein Navigationsziel und der Sekundärparameter ein Kriterium der Routenplanung für die Zielführung zu diesem Navigationsziel, z.B. schnelle oder kurze Route.

Gemäß einer anderen bevorzugten Ausführungsform der Erfindung ist der Primärparameter eine Internet-Adresse und der Sekundärparameter eine Schriftgröße für die Anzeige der unter dieser Adresse verfügbaren Inhalte.

Besonders vorteilhaft umgesetzt werden kann die Erfindung, indem das Dialogsystem derart ausgebildet ist, dass die aktuelle Belegung der Bedientaste auf eine Anforderungshandlung eines Bedieners hin anzeigbar ist. Der Bediener kann sich somit durch die Anforderungshandlung informieren, welche Konsequenz eine Betätigung der Bedientaste hat bzw. haben würde.

Die Anforderungshandlung kann beispielsweise in einer leichten Berührung der Bedientaste, in einem leichten Antippen der Bedientaste oder in einer Annäherung der Hand des Bedieners an die Bedientaste bestehen, wenn das Dialogsystem geeignet ist, eine solche Berührung, ein solches Antippen und/oder eine solche Annäherung zu detektieren.

Ganz besonders vorteilhaft ist eine Ausführungsform der Erfindung, bei welcher der Bediener mit einer Bedientaste, die erfindungsgemäß belegt ist, folgendermaßen interagieren kann: Auf eine erste Anforderungshandlung eines Bedieners hin wird eine Beschreibung des Primärparameters angezeigt. Beispielsweise kann, wenn der Primärparameter ein Navigationsziel ist, hierzu textuell eine Kurzbeschreibung dieses Navigationsziels ausgegeben werden, z.B. "Büro". Erst auf eine zweite Anforderungshandlung eines Bedieners hin wird auch eine Beschreibung des Sekundärparameters angezeigt. Letzteres erfolgt vorzugsweise im Zusammenhang mit einer erweiterten Beschreibung des Primärparameters. Beispielsweise kann hierzu erneut die Kurzbeschreibung ausgegeben werden, z.B. "Büro". Zudem kann als erweiterte Beschreibung die exakte Adresse ausgegeben werden. Zudem wird als Sekundärparameter der zugeordnete Maßstab der Kartenansicht angezeigt.

Als erste Anforderungshandlung kann beispielsweise eine Berührung der Bedientaste definiert sein, als zweite Anforderungshandlung ein Beibehalten der Berührung über eine bestimmte Zeitspanne hinweg, z.B. für 2 Sekunden.

Vorzugsweise sind die Funktionen der vorgegebenen Menge von Funktionen, mit denen die Bedientaste belegbar ist, in einer hierarchischen Menüstruktur organisiert und wahlweise über ein multifunktionales Bedienelement auslösbar. Das multifunktionale Bedienelement kann als Dreh-/Drucksteller ausgebildet sein.

Die Zuordnung des Primärparameters erfolgt vorzugsweise in an sich bekannter Art und Weise durch einen Langdruck der Bedientaste oder eine andere Belegungshandlung während der Ausführung der Funktion. Die Zuordnung des Sekundärparameters erfolgt vorzugsweise, indem der jeweils zu speichernde Sekundärparameter automatisch bestimmt und ebenfalls der Bedientaste zugeordnet wird, wenn dieser der Primärparameter zugeordnet wird. Beispielsweise kann die Belegung einer Bedientaste mit einem Navigationsziel und dem für dieses Navigationsziel geeigneten Karten-Maßstab folgendermaßen erfolgen: Zunächst startet der Bediener unabhängig von der Bedientaste, etwa unter Nutzung eines Dreh-/Druckknopfes oder eines anderen multifunktionalen Eingabegeräts, eine Zielführung zu dem Navigationsziel. Davor oder danach wählt er für die Bildschirmansicht einen geeigneten Karten-Maßstab. Erst wenn der Maßstab wie gewünscht eingestellt ist, belegt der Bediener die Bedientaste mit dem Navigationsziel, indem er sie langanhaltend drückt. Bei der Belegung wird der aktuell gewählte Karten-Maßstab von dem Dialogsystem bestimmt und der Bedientaste als Sekundärparameter zugeordnet.

In vergleichbarer Weise kann auch bei anderen Primärparametern und Sekundärparametern die Belegung erfolgen. Stets wird im Fall einer Belegung einer Bedientaste mit einem Primärparameter während der Ausführung einer Funktion nicht nur der Primärparameter, auf dessen Basis die Funktion aktuell ausgeführt wird, der Bedientaste zugeordnet, sondern zudem zumindest ein Sekundärparameter, der die Art und Weise der Funktionsausführung bestimmt, bzw. dessen aktueller Wert ausgelesen und der zu belegenden Bedientaste zugeordnet. Die Bedientaste wird somit durch eine einzige Belegungshandlung (z.B. Langdruck) mit mehreren Parametern belegt (Primärparameter und Sekundärparameter). Gegebenenfalls kann die Zuordnung auch gleich mehrere Sekundärparameter betreffen, beispielsweise Karten-Maßstab und Karten-Ausrichtung. Erfindungsgemäß wird dem Bediener eine Möglichkeit angeboten, die Bedientaste mit dem Primärparameter zu belegen, ohne der Bedientaste gleichzeitig einen Sekundärparameter zuzuordnen. Beispielsweise kann die Belegung ausschließlich mit dem Primärparameter ermöglicht werden, indem eine Belegungshandlung (z.B. Langdruck) zu einem Zeitpunkt ausgeführt wird, zu dem der Primärparameter in einer Menüansicht hervorgehoben ist, aber noch bevor die Funktion mit dem Primärparameter gestartet wurde.
Wenn einer so belegten Bedientaste dementsprechend nur ein Primärparameter, jedoch kein Sekundärparameter zugeordnet ist, kann die jeweilige Funktion bei Betätigung der Bedientaste wie bei herkömmlichen gattungsgemäßen Dialogsystemen in der zuletzt eingestellten Art und Weise und/oder in einer systemseitig voreingestellten Art und Weise ausgeführt werden.
Als Alternative zum weiter oben beschriebenen Auslesen des Sekundärparameters während der Funktionsausführung kann vom Bediener im Rahmen der Belegung der Bedientaste interaktiv abgefragt werden, ob er der Bedientaste einen Sekundärparameter zuordnen will und ggf. welchen Sekundärparameter bzw. welchen Wert desselben. Dieses interaktive Verfahren ist sowohl während als auch außerhalb einer Funktionsausführung anwendbar.
Vorzugsweise ist bei dem Dialogsystem eine Logik hinterlegt, die vorgibt, in welchen Fällen einer Bedientaste neben einem Primärparameter auch ein Sekundärparameter zuzuordnen ist. Beispielsweise kann eine solche Logik bewirken, dass einer Bedientaste nur dann ein oder mehrere Sekundärparameter zugeordnet werden, z.B. Karten-Maßstab und/oder Karten-Ausrichtung, wenn der zugeordnete Primärparameter ein Navigationsziel ist. Allen anderen Arten von Primärparametern werden bei Hinterlegung einer solchen Logik keine Sekundärparameter beigestellt.
Im Folgenden wird die Erfindung anhand eines bevorzugten Ausführungsbeispiels näher erläutert.
Ein Dialogsystem in einem Kraftfahrzeug umfasst mehrere frei belegbare Favoriten-Tasten. Diese sind unter anderem mit Navigationszielen belegbar.

Wird in einer Liste von Navigationszielen ein Navigationsziel hervorgehoben, beispielsweise durch Auswahl mittels eines Dreh-/Druckstellers, und wird eine Favoriten-Taste langanhaltend gedrückt (z.B. länger als 2 Sekunden), so wird diese Favoriten-Taste mit dem Navigationsziel belegt. Weitere Parameter werden bei dieser Art der Belegung nicht gespeichert und/oder der Favoriten-Taste zugeordnet.

Wird jedoch die Zielführung zu einem bestimmten Navigationsziel bereits ausgeführt und wird während dieser Ausführung eine Favoriten-Taste langanhaltend gedrückt, so wird die Favoriten-Taste nicht nur mit dem Navigationsziel belegt, sondern auch mit zwei Parametern, die zum Zeitpunkt der Belegung für die Bildschirmansicht eingestellt sind, nämlich mit dem aktuell eingestellten Karten-Maßstab (z.B. 1:10000) und der aktuell eingestellten Karten-Ausrichtung (z.B. nordweisend).

Selbst wenn diese Parameter zwischenzeitlich - etwa im Rahmen einer Zielführung zu einem anderen Ziel - ganz anders eingestellt worden sind, wird bei einer Betätigung der so belegten Favoriten-Taste die Zielführung zu dem Navigationsziel gestartet und zudem der Karten-Maßstab auf den zum Zeitpunkt der Belegung eingestellten Wert eingestellt und die Karten-Ausrichtung auf den zum Zeitpunkt der Belegung eingestellten Wert eingestellt.

## Patentansprüche

1. Dialogsystem für ein Kraftfahrzeug mit einer Mehrzahl von frei belegbaren Bedientasten, die jeweils mit einer Funktion aus einer vorgegebenen Menge von Funktionen, zu welcher zumindest eine Zielführungsfunktion, eine Anruffunktion und eine RadioWiedergabefunktion gehören, derart belegbar sind, dass die jeweilige Funktion bei Betätigung der jeweiligen Bedientaste ausgeführt wird, wobei im Falle der Zielführungsfunktion jeder der Bedientasten jeweils durch eine Belegungshandlung neben einem für eine Zielführung zwingend erforderlichen Navigationsziel als Primärparameter zusätzlich zumindest ein eine Art und Weise der Zielführung betreffender Sekundärparameter derart zuordenbar ist, dass bei Betätigung der Bedientaste die Zielführung zu dem Navigationsziel in der durch den zumindest einen Sekundärparameter festgelegten Art und Weise ausgeführt wird, und wobei der jeweiligen Bedientaste durch die Belegungshandlung entweder ausschließlich das Navigationsziel zugeordnet wird, wenn die Belegungshandlung zu einem Zeitpunkt vor Ausführung einer entsprechenden Zielführung zu dem Navigationsziel erfolgt, oder der Bedientaste neben dem Navigationsziel zusätzlich der zumindest eine die Art und Weise der Zielführung betreffende Sekundärparameter zugeordnet wird, wenn die Belegungshandlung während der Ausführung einer entsprechenden Zielführung zu dem Navigationsziel erfolgt.

2. Dialogsystem nach Anspruch 1, **dadurch gekennzeichnet, dass** der zumindest eine Sekundärparameter die Art und Weise einer die Zielführung betreffenden Bildschirmwiedergabe betrifft.

3. Dialogsystem nach Anspruch 1, **dadurch gekennzeichnet, dass** der zumindest eine Sekundärparameter ein Kriterium der Routenplanung für die Zielführung ist.

4. Dialogsystem nach einem der Ansprüche 1 bis 3, **dadurch gekennzeichnet, dass** die aktuelle Belegung der Bedientaste auf eine Anforderungshandlung eines Bedieners hin anzeigbar ist.

5. Dialogsystem nach Anspruch 4, **dadurch gekennzeichnet, dass** bei Belegung der Bedientaste mit dem Primärparameter und dem zumindest einen Sekundärparameter
- auf eine erste Anforderungshandlung eines Bedieners hin eine Beschreibung des Primärparameters angezeigt wird und
- auf eine zusätzliche zweite Anforderungshandlung eines Bedieners hin eine Beschreibung des zumindest einen Sekundärparameters angezeigt wird.

## Claims

1. A dialogue system for a motor vehicle, comprising a plurality of freely configurable control keys which can each be configured with a function from a predefined set of functions, including at least a navigation function, a telephone call function and a radio playback function, in such a way
that this function is executed upon actuation of the corresponding control key,
wherein, in the case of the navigation function,
each of the control keys can be assigned, by a configuration operation, in addition to a navigation destination absolutely necessary for the navigation as primary parameter, additionally at least one secondary parameter relating to the navigation method, in such a way that upon actuation of the control key the navigation to the navigation destination is performed in the way determined by the at least one secondary parameter, and
wherein the control key in question is either assigned exclusively the navigation destination by the configuration operation if the configuration operation occurs at a moment in time before a corresponding navigation to the navigation destination has been performed, or the control key is assigned, in addition to the navigation destination, additionally the at least one secondary parameter relating to the navigation method if the configuration operation occurs whilst a corresponding navigation to the navigation destination is being performed.

2. A dialogue system according to claim 1, **characterised**
**in that** the at least one secondary parameter relates to the type of screen reproduction relating to the navigation.

3. A dialogue system according to claim 1, **characterised in that** the at least one secondary parameter is a criterion of the route planning for the navigation.

4. A dialogue system according to any one of claims 1 to 3, **characterised in that** the current configuration of the control keys can be displayed in response to a request operation of an operator.

5. A dialogue system according to claim 4, **characterised in that,** when configuring the control key with the primary parameter and the at least one secondary parameter,
- a description of the primary parameter is displayed in response to a first request operation of an operator, and
- a description of the at least one secondary parameter is displayed in response to an additional second request operation of an operator.

## Revendications

1. Système de dialogue pour un véhicule comportant plusieurs touches de service qui peuvent être occupées librement avec chaque fois une fonction parmi un ensemble prédéfini de fonctions comprenant une fonction de guidage vers la destination, une fonction d'appel et une fonction radio, de façon que la fonction respective soit exécutée lorsque la touche de service correspondante est activée,
- et en cas de fonction de guidage vers la cible, chacune des touches de service est associée par une manoeuvre d'attribution à côté d'une destination de navigation comme paramètre primaire nécessaire obligatoirement pour un guidage vers une destination, avec des paramètres secondaires de façon qu'à l'actionnement de la touche de service, le guidage vers la destination par la navigation soit exécuté à la manière fixée par au moins un paramètre secondaire, et
- à la touche de service respective, la manoeuvre d'occupation associe soit exclusivement la destination de navigation si la manoeuvre d'occupation est faite à un instant avant l'exécution d'un guidage vers la destination correspondante pour la destination de navigation soit la touche de service, à côté de la destination de navigation, se voit attribuer au moins un paramètre secondaire concernant l'art et la manière du guidage vers la destination si la manoeuvre d'occupation se fait pendant l'exécution d'un guidage correspondant vers la destination de navigation.

2. Système de dialogue selon la revendication 1,
**caractérisé en ce qu'**
au moins un paramètre secondaire concerne l'art et la manière de la reproduction sur l'écran-image du guidage vers la destination.

3. Système de dialogue selon la revendication 1,
**caractérisé par**
au moins un paramètre secondaire qui est un critère de planification du trajet pour le guidage vers la destination.

4. Système de dialogue selon l'une des revendications 1 à 3,
**caractérisé en ce que**
l'occupation actuelle de la touche de manoeuvre est affichée par une manoeuvre de requête d'un utilisateur.

5. Système de dialogue selon la revendication 4,
**caractérisé en ce qu'**
- après l'occupation de la touche de service avec le paramètre primaire et au moins un paramètre secondaire, en réponse à une première manoeuvre de requête de l'utilisateur, la description du paramètre primaire est affichée, et
- en réponse à une second manoeuvre de requête de l'utilisateur, la description d'au moins un paramètre secondaire est affichée.
